# EUROPÄISCHE PATENTSCHRIFT

(11) **EP 1 246 302 B1**
(45) Veröffentlichungstag und Bekanntmachung des Hinweises auf die Patenterteilung: **30.08.2006**
(21) Anmeldenummer: 02005930.9
(22) Anmeldetag: 15.03.2002
(51) Int. Cl.: H01R 4/24, B25B 15/02

(54) **Schneidvorrichtung für ein Werkzeug, insbesondere für einen Schraubendreher**
Cutting device for a tool, especially a screwdriver
Dispositif de coupe pour un outil, notamment un tournevis

(30) Priorität: 28.03.2001 DE 20105530 U
(43) Veröffentlichungstag der Anmeldung: 02.10.2002
(73) Patentinhaber: Weidmüller Interface GmbH & Co., 32760 Detmold (DE)
(72) Erfinder: Heggemann, Christian, 32758 Detmold (DE); Herzog, Armin, 32756 Detmold (DE)
(74) Vertreter: Specht, Peter

(56) Entgegenhaltungen:
- DE-U1- 29 722 355
- DE-U1- 29 918 557
- FR-A- 408 956
- GB-A- 1 065 639
- US-A- 3 138 044

## Beschreibung

Die Erfindung betrifft eine Schneidvorrichtung für ein Werkzeug, insbesondere für einen Schraubendreher, mit einem Klemmstückaufsatz, welcher auf einen Schaft, insbesondere des Schraubendrehers aufschiebbar und dort arretierbar ist.

Insbesondere bei Reihenklemmen mit isolationsdurchdringendem Schneidanschluß ist es erforderlich, zunächst das Kabel zu durchtrennen und es dann mit Hilfe eines Schraubendrehers in den isolationsdurchdringenden Schneidanschluß einzuführen.

Eine derartige Lösung ist beispielsweise aus der DE 299 18 557 bekannt. Zum Durchschneiden des Leiters wird beispielsweise eine Zange benutzt, d.h. es ist nötig, mit zwei Werkzeugen zu hantieren, um die Reihenklemmen mit einem isolationsdurchdringendem Schneidanschluß zu beschalten.

Aus der DE 299 18 557 ist es auch bekannt, den Schraubendreher mit einem Klemmstückaufsatz zu versehen, welcher eine Anlage für den Leiter bildet, wobei es ferner möglich ist, an den Klemmstückaufsatz ein Distanzstück anzusetzen, welches das Einführen des Leiters für die Anschlußvorrichtung vereinfacht.

Dennoch ist es weiter notwendig, neben dem Schraubendreher noch ein weiteres Werkzeug zum Durchtrennen des Leiters oder Kabels bereitzuhalten.

Die Erfindung zielt vor diesem Stand der Technik darauf ab, eine Schneidvorrichtung zu schaffen, welche das Beschalten von isolationsdurchdringenden Schneidanschlüssen, insbesondere von Reihenklemmen mit isolationsdurchdringenden Schneidanschlüssen erleichtert.

Die Erfindung erreicht dieses Ziel durch den Gegenstand des Anspruches 1. Dabei ist weisen der Betätigungshebel und/oder der Klemmstückaufsatz eine Schneidkante zum Durchtrennen elektrischer Kabel oder Leitungen auf.

Mit der Erfindung ergibt sich der Vorteil, daß der Monteur das Ablängen des elektrischen Leiters vor dem eigentlichen Einführen in die IDC-Klemmstelle mit dem gleichen Werkzeug bewerkstelligen kann, mit dem er auch die Klemme beschaltet. Das dauernde Wechseln der bisher üblichen Einzelwerkzeuge (Schraubendreher/Schneidwerkzeug) kann somit entfallen, was in der Praxis zu einem Zeitvorteil beim Beschalten der Schneidanschlüsse führt.

Die Erfindung schafft eine Schneidvorrichtung, welche sich in einfacher Weise an jede handelsüblichen Schraubendreher nachrüsten läßt. Selbstverständlich kann die Erfindung um die aus dem Stand der Technik bekannten Distanzstücke ergänzt werden.

Denkbar ist es auch, den Klemmstückaufsatz mit dem Schaft oder Griff einstückig auszubilden und somit Schraubendreher nebst Klemmstückaufsatz bzw. nebst Schneidvorrrichtung als Einheit zu verkaufen.

Vorteilhafte Ausführungsformen der Erfindung sind in den Unteransprüchen angegeben.

Nachfolgend wird die Erfindung unter Bezug auf die Zeichnung anhand von Ausführungsbeispielen näher beschrieben. Es zeigen:
- Figur 1a ― 1d: verschiedene perspektivische Ansichten eines Schraubendrehers mit einem ersten Ausführungsbeispiel einer erfindungsgemäßen Schneidvorrichtung,
- Figur 2a: den Schraubendreher aus Fig. 1 ohne Schneidvorrichtung;
- Figur 2b ― 2d: Ansichten des Klemmstückaufsatzes aus Figur 1;
- Figur 3a und 3b: eine Variante eines Klemmstückaufsatzes;
- Figur 4a und 4b: eine weitere Variante eines Klemmstückaufsatzes;
- Figur 5a und 5b: Ansichten des Betätigungsknopfes aus Figur 1;
- Figur 6a und 6b: Ansichten eines Schraubendrehers mit einer zweiten erfindungsgemäßen Schneidvorrichtung;
- Figur 7a und 7b: Ansichten des Betätigungshebels aus Figur 6;
- Figuren 8 bis 10: weitere Varianten von Schraubendrehern mit erfindungsgemäßen Schneidvorrichtungen;
- Figur 11a: eine Ansicht des Betätigungshebels aus Figur 10;
- Figur 11b und 11c: Ansichten des Klemmstückaufsatzes aus Figur 10 nebst Schneidmesser.

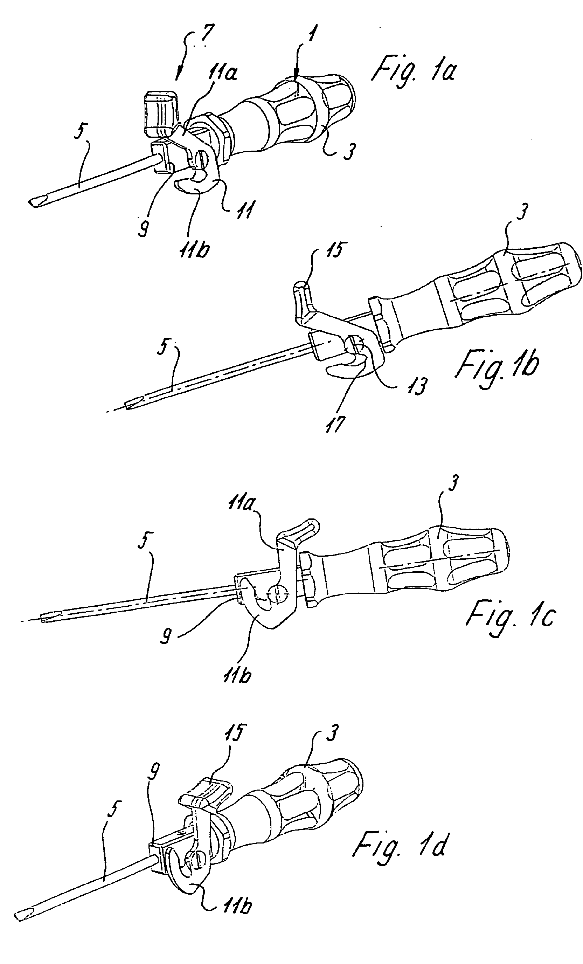

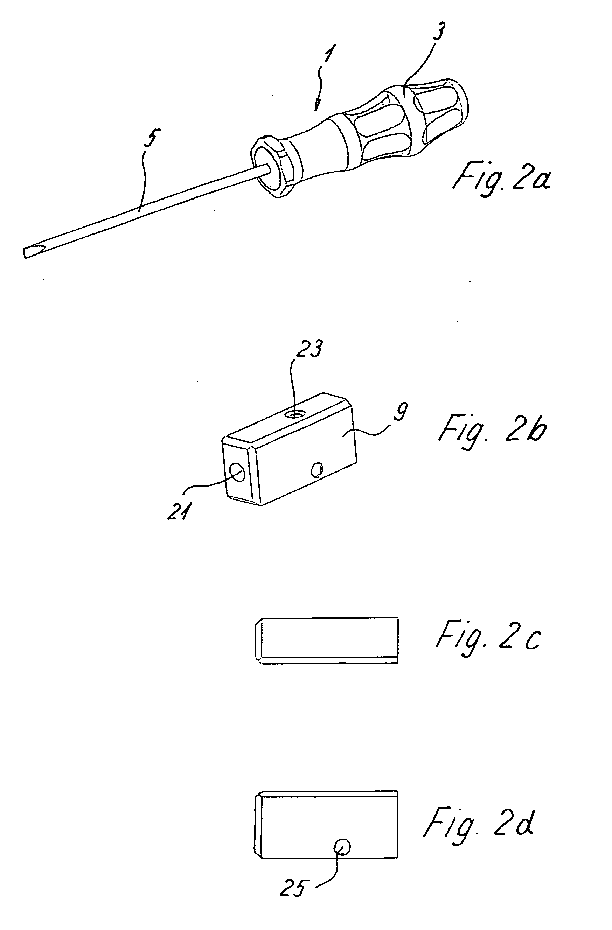

Figur 1 zeigt einen Schraubendreher 1 mit einem Schraubendrehergriff 3 und einem Schaft 5. Es handelt sich hierbei um einen handelsüblichen Schraubendreher. Dieser Schraubendreher ist als separates Teil auch in Figur 2a abgebildet.

Auf den Schraubendreher 1 ist eine erfindungsgemäße Schneidvorrichtung 7 aufgesetzt.

Der Schneidvorrichtung 7 weist einen Klemmstückaufsatz 9 auf, der über den Schaft 5 des Schraubendrehers geschoben ist. Am Klemmstückaufsatz 9 ist ein Betätigungshebel 11 schwenkbar gelagert. Der Betätigungshebel 11 weist zwei Hebelarme 11a und 11b auf, die sich zu entgegengesetzten Seiten eines Schwenklagers 13 erstrecken, welches am Klemmstückaufsatz 9 ausgebildet ist. Am vom Schwenklager 13 abgewandten Ende des einen Hebelarmes 11a ist ein Betätigungsknopf 15 ausgebildet. Der dem Hebelarm 11a gegenüberliegende Hebelarm auf der anderen Seite des Schwenklagers 13 weist eine gebogene Formgebung auf, wobei die zum Klemmstückaufsatz 9 hin liegende Kante des Hebelarmes 11b mit einer mit dem Hebelarm einstückigen Schneidkante 17 versehen ist.

Mit einem mit der erfindungsgemäßen Schneidvorrichtung 7 versehenen Schraubendreher ist es auf einfache Weise möglich, eine Reihenklemme mit IDC-Anschluß zu beschalten.

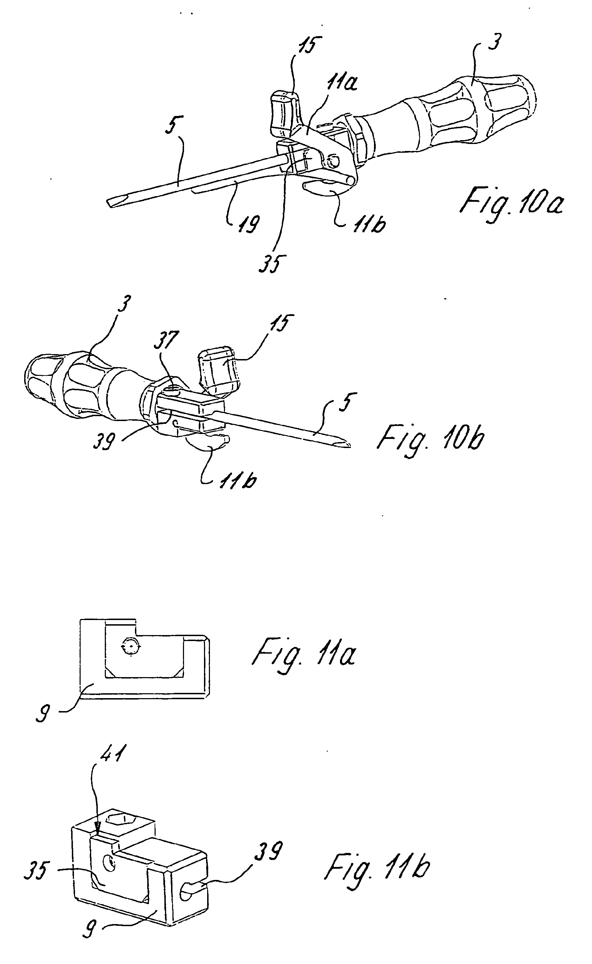

Analog zur Figur 10 wird dabei ein Kabel 19 in den Freiraum zwischen dem Klemmstückaufsatz und dem Hebelarm 11b mit der Schneidkante 17 eingeführt. Sodann wird ― in Figur 1 beispielsweise mit deni Daumen ― der Betätigungsknopf 15 niedergedrückt, so daß das Kabel 19 zwischen dem Klemmstückaufsatz 9 und dem Hebelarm 11b zunächst eingeklemmt wird, wobei das Kabel durchtrennt wird. Das Kabel kann dann in eine Klemme, z.B. eine Reihenklemme mit einer Schneid- bzw. IDC-Anschlußvorrichtung eingeführt werden (hier nicht dargestellt).

Der besondere Vorteil der Erfindung liegt darin, daß insbesondere bei IDC-Anschlüssen neben einem Schraubendreher zur Fertigstellung der Anschlüsse im Grund kein weiteres Werkzeug mehr erforderlich ist. Mit dem eigentlichen Schraubendreher kann die Klemme betätigt werden. Die auf den Schraubendreher aufgesetzte Schneidvorrichtung kann zum Durchtrennen der Kabel genutzt werden.

Aus der Figur 2 ist ersichtlich, daß ein erster Klemmstückaufsatz 9 eine zentrale Bohrung 21 aufweist, welche den Klemmstückaufsatz mittig durchsetzt. Diese Bohrung dient zum Aufschieben des Klemmstückes auf den Schaft. Eine zur Bohrung 21 senkrechte Bohrung 23, welche beispielsweise mit Innengewinde versehen werden kann, dient dagegen zum Einsetzen einer Klemmschraube (hier nicht dargestellt), welche beim Einschrauben auf den Schaft 5 des Schraubendrehers 1 in der Bohrung 21 trifft und dort den Klemmsitz des Klemmstückaufsatzes 9 auf den Schraubendreher sicherstellt.

Eine weitere Bohrung 25, welche ebenfalls im wesentlichen senkrecht zur Bohrung 21 ausgebildet ist und die Bohrung 21 und die Bohrung 23 kreuzt, dient zur Aufnahme einer Welle 27 zur Lagerung des Betätigungshebels 11 am Klemmstückaufsatz 9, d.h. die Welle 27 bildet das eigentliche Schwenklager 13 aus.

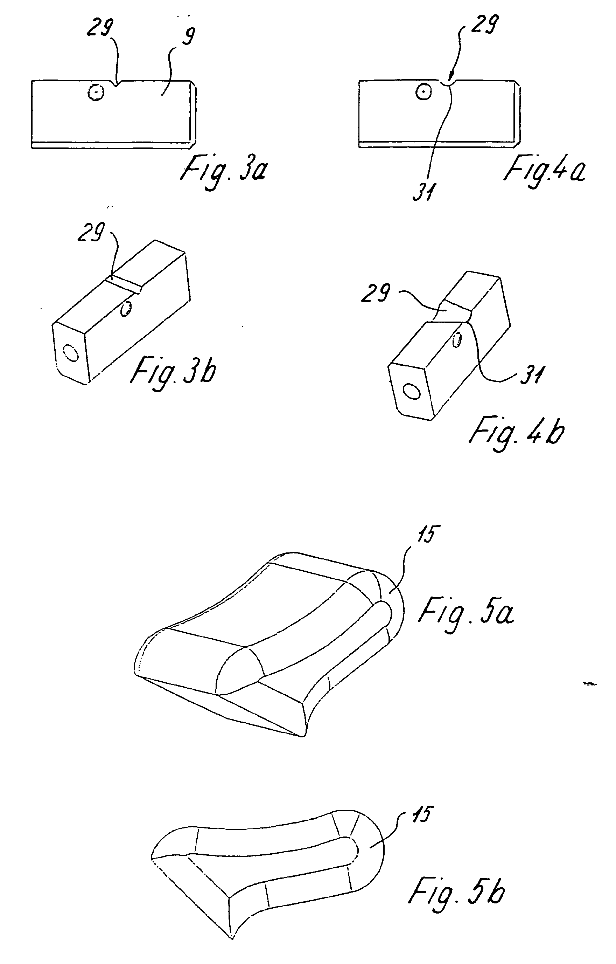

Der Klemmstückaufsatz 9 der Figur 3 unterscheidet sich vom Klemmstückaufsatz 9 aus Figur 2 im wesentlichen dadurch, daß eine Einkerbung oder Nut 29 zum definierten Führen des Kabels am Klemmstück ausgebildet ist, welche das Einführen des Kabels in den Bereich zwischen der Schneidkante 17 und dem Klemmstückaufsatz 9 erleichtert.

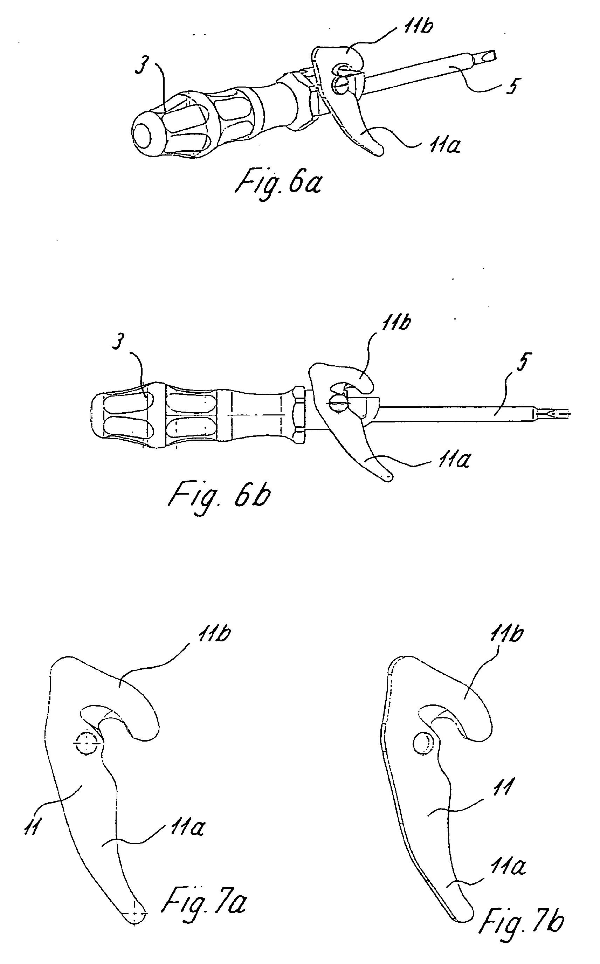

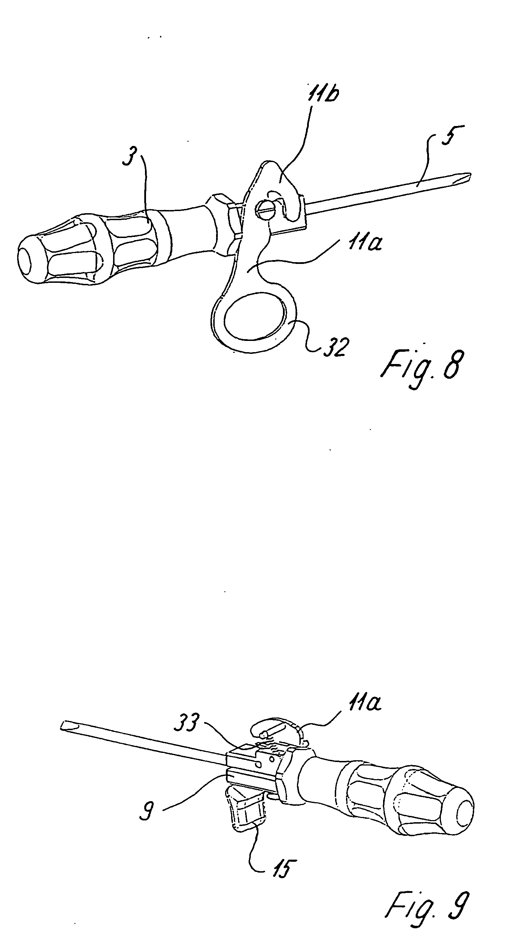

Nach Figur 9 ist die Einkerbung 29 derart ausgebildet, daß am Rand des Klemmstückaufsatzes im Bereich der Einkerbung eine Art Schneidkante 31 ausgebildet wird, welche entweder die Funktion der Schneidkante 17 am Hebelarm 11b unterstützt oder aber diese Schneidkantenfunktion ersetzt, wenn der Betätigungshebel nicht mit einer solchen Schneidkante ausgebildet ist (z.B. Figur 6 und 10).

Figur 5a und 5b zeigen die Ausbildung des Betätigungsknopfes 15 als Kunststofformteil, welches einfach auf den ansonsten vorzugsweise metallischen Betätigungshebel bzw. auf den Hebelarm 11a aufgeschoben wird.

Figur 6a zeigt eine weitere Ausführungsform der Erfindung, bei welcher am Betätigungshebel 11 bzw. an dessen Hebelarm 11a kein gesonderter Betätigungsknopf 15 ausgebildet ist. Der Hebelarm 11a weist vielmehr eine leicht geschwungene Form zur Betätigung mittels des Zeigefingers auf. Das Ausführungsbeispiel der Figur 6 unterscheidet sich vom Ausführungsbeispiel der Figur 1 also im wesentlichen dadurch, daß anstelle einer Daumenbetätigung hier bevorzugt eine Betätigung mittels Zeigefinger gewählt wird.

Figur 7a und 7b zeigen separate Vorder- und Rückansichten des Betätigungshebels 11 aus Figur 6. Gut zu erkennen ist die langgezogene Form des Hebelarmes 11a zur Gewährleistung eines guten Ansatzes des Zeige- und/oder Mittel- und/oder Ringfingers.

Nach Figur 8 ist bei einem weiteren Ausführungsbeispiel der Erfindung der zur Betätigung vorgesehene Hebelarm 11a in seinem Endbereich mit einer Art Ring oder Öse 32 versehen, welche ebenfalls vom Zeigefinger betätigbar ist.

Figur 9 zeigt in Ergänzung zu den bereits dargestellten Ausführungsformen eine Variante der Erfindung, bei welcher an der Schneidvorrichtung 7 zwischen dem Klemmstückaufsatz 9 und dem Betätigungsknopf 15 abgewandten Ende des Betätigungshebels 11, also am Hebelarm 11a, eine Feder 33 ausgebildet ist, welche ein Rückstellen des Betätigungshebels 11 nach erfolgtem Durchtrennen eines Kabels sicherstellt.

Bei der Ausführungsformen der Figuren 10 ist besonders gut erkennbar (s. Figur 10a) wie das Durchtrennen des Kabels 19 in der Praxis erfolgt.

Das Ausführungsbeispiel der Fig. 10 unterscheidet sich vom Ausführungsbeispiel der Figur 1 im wesentlichen dadurch, daß in Ergänzung zur Schneidkante 17 am Betätigungshebel 11 oder als Ersatz dieser Schneidkante auch der Klemmstückaufsatz 9, der hier aus Kunststoff gefertigt ist, mit einem auf den Klemmstückaufsatz 9 aufgesetzten Schneidmesser 35 versehen ist.

Ein weiterer Unterschied dieser Ausführungsform ist darin zu sehen, daß, wie in Figur 10b erkennbar, der Klemmstückaufsatz 9 nicht nur mit einer zentralen Bohrung 21 versehen ist, sondern auch mit einer sich von der zentralen Bohrung 21 radial nach außen erstreckenden Nut 34. Das Festklemmen des Klemmstückaufsatzes 9 erfolgt hier mittels einer Spannschraube 37, welche sowohl das Klemmstück als auch die Nut 39 durchsetzt, so daß durch Anziehen der Klemmschraube die beiden Bereiche des Klemmstückaufsatzes beidseitig der Nut zueinander gedrückt werden, was den Klemmstückaufsatz am Schaft 5 arretiert.

Figur 11a und 11b zeigen den Klemmstückaufsatz 9 mit der Nut 39 und dem separaten Schneidmesser 35, welches hier als Schneidkante fungiert und in eine Ausnehmung 41 an der der Nut gegenüberliegenden Seite des Klemmstückaufsatzes eingesetzt ist. Damit liegt das Schneidmesser 35 quasi zwischen dem Klemmstückaufsatz 9 und dem Betätigungshebel 11.

### Bezugszeichenliste

- 1: Schraubendreher
- 3: Schraubendrehergriff
- 5: Schaft
- 7: Aufsatz
- 9: Klemmstückaufsatz
- 11: Betätigungshebel
- 11a: Hebelarm
- 11b: Hebelarm
- 13: Schwenklager
- 15: Betätigungsknopf
- 17: Schneidkante
- 19: Kabel
- 21: Bohrung
- 23: Bohrung
- 25: Bohrung
- 27: Welle
- 29: Nut
- 31: Schneidkante
- 32: Öse
- 33: Feder
- 34: Nut
- 35: Schneidmesser
- 37: Spannschraube
- 39: Nut
- 41: Ausnehmung

## Patentansprüche

1. Schneidvorrichtung für ein Werkzeug, insbesondere für einen Schraubendreher (1), mit einem Klemmstückaufsatz (9), welcher auf einen Schaft (5), insbesondere des Schraubendrehers (1) aufschiebbar und dort arretierbar ist, wobei am Klemmstückaufsatz (9) ein Betätigungshebel (11) verschwenkbar gelagert ist und wobei der Betätigungshebel (11) und/oder der Klemmstückaufsatz (9) eine Schneidkante (17, 31, 35) zum Durchtrennen elektrischer Kabel oder Leitungen aufweist/aufweisen.

2. Schneidvorrichtung nach Anspruch 1, **dadurch gekennzeichnet, daß** der Klemmstückaufsatz (9) am Schaft (5) des Schraubendrehers (1) mittels einer Klemm- oder Spannschraube (37) festklemmbar ist.

3. Schneidvorrichtung nach einem der vorstehenden Ansprüche, **dadurch gekennzeichnet, daß** der Betätigungshebel (11) am Klemmstückaufsatz (9) verschwenkbar gelagert ist und einen ersten Hebelarm (11a) zur Betätigung sowie einen zweiten Hebelarm (11b) zum Durchtrennen des Leiters oder Kabels zwischen dem Klemmstückaufsatz (9) und dem Betätigungshebel (11) aufweist.

4. Schneidvorrichtung nach einem der vorstehenden Ansprüche, **dadurch gekennzeichnet, daß** der Hebelarm (11b) eine gebogene Form aufweist.

5. Schneidvorrichtung nach einem der vorstehenden Ansprüche, **dadurch gekennzeichnet, daß** auf den Hebelarm (11a) ein Betätigungsknopf (15) aufsetzbar ist.

6. Schneidvorrichtung nach einem der vorstehenden Ansprüche, **dadurch gekennzeichnet, daß** der Klemmstückaufsatz (9) von einer mittigen Bohrung (21) zum Aufschieben des Klemmstückaufsatzes (9) auf den Schaft (5) des Schraubendrehers durchsetzt ist.

7. Schneidvorrichtung nach einem der vorstehenden Ansprüche, **dadurch gekennzeichnet, daß** am Klemmstückaufsatz (9) eine Einkerbung (29) zum Führen des Kabels und/oder Leiters ausgebildet ist.

8. Schneidvorrichtung nach einem der vorstehenden Ansprüche, **dadurch gekennzeichnet, daß** die Einkerbung (29) in ihrem Randbereich klingenartig/scharfkantig ausgebildet ist.

9. Schneidvorrichtung nach einem der Ansprüche 1 bis 8, **dadurch gekennzeichnet, daß** die Schneidkante einstückig mit dem Klemmstückaufsatz (9) oder dem Betätigungshebel (11) ausgebildet ist.

10. Schneidvorrichtung nach einem der Ansprüche 1 bis 8, **dadurch gekennzeichnet, daß** die Schneidkante als an den Klemmstückaufsatz (9) oder den Betätigungshebel (11) ansetzbares Schneidmesser (35) ausgebildet ist.

11. Schneidvorrichtung nach einem der vorstehenden Ansprüche, **dadurch gekennzeichnet, daß** der Hebelarm (11a) zur Betätigung mittels Daumen oder Finger ausgebildet ist.

12. Schneidvorrichtung nach einem der vorstehenden Ansprüche, **dadurch gekennzeichnet, daß** am Hebelarm (11a) ein Ring (32) zum Ansatz eines Fingers ausgebildet ist.

13. Schneidvorrichtung nach einem der vorstehenden Ansprüche, **dadurch gekennzeichnet, daß** zwischen dem Hebelarm (11a) und dem Klemmstückaufsatz (9) eine Feder (33) zur Rückstellung des Betätigungshebels (11) nach einer Betätigung ausgebildet ist.

14. Schneidvorrichtung nach einem der vorstehenden Ansprüche, **dadurch gekennzeichnet, daß** der Klemmstückaufsatz (9) eine Nut (39) aufweist, welche sich von der Bohrung (21) radial nach außen erstreckt und daß die beiden Bereiche beidseits der Nut des Klemmstückaufsatzes (9) mittels einer Spannschraube (37) gegeneinander verspannbar sind.

15. Schneidvorrichtung nach einem der vorstehenden Ansprüche, **dadurch gekennzeichnet, daß** der Klemmstückaufsatz (9) mit einer Ausnehmung (41) versehen ist, in welche das Schneidmesser (35) einschiebbar ist.

16. Schneidvorrichtung nach einem der vorstehenden Ansprüche, **dadurch gekennzeichnet, daß** der Klemmstückaufsatz (9) mit dem Schaft oder Griff einstückig ausgebildet ist.

## Claims

1. Cutting device for a tool, in particular for a screwdriver (1), with a clamping attachment (9) which can be pushed onto a shaft (5), in particular of the screwdriver (1), and secured thereon, such that an actuation lever (11) is mounted to swivel on the clamping attachment (9) and such that the actuation lever (11) and/or the clamping attachment (9) has/have a cutting edge (17, 31, 35) for cutting through electric cables or leads.

2. Cutting device according to Claim 1, **characterised in that** the clamping attachment (9) can be secured firmly on the shaft (5) of the screwdriver (1) by means of a clamping or tightening screw (37).

3. Cutting device according to either of the preceding claims, **characterised in that** the actuation lever (11) is mounted to swivel on the clamping attachment (9) and comprises a first lever arm (11a) for actuation and a second lever arm (11b) for cutting through the lead or cable between the clamping attachment (9) and the actuation lever (11).

4. Cutting device according to any of the preceding claims, **characterised in that** the lever arm (11b) has a curved shape.

5. Cutting device according to any of the preceding claims, **characterised in that** an actuation tab (15) can be fixed on the lever arm (11a).

6. Cutting device according to any of the preceding claims, **characterised in that** the clamping attachment (9) has a central bore (21) to enable the clamping attachment (9) to be pushed onto the shaft (5) of the screwdriver.

7. Cutting device according to any of the preceding claims, **characterised in that** an indentation (29) is formed on the clamping attachment (9) to guide the cable and/or lead.

8. Cutting device according to any of the preceding claims, **characterised in that** in its edge area the indentation (29) is shaped as a blade/sharp-edged.

9. Cutting device according to any of Claims 1 to 8, **characterised in that** the cutting edge is formed integrally with the clamping attachment (9) or the actuation lever (11).

10. Cutting device according to any of Claims 1 to 8, **characterised in that** the cutting edge is in the form of a cutting blade (33) which can be fixed to the clamping attachment (9) or the actuation lever (11).

11. Cutting device according to any of the preceding claims, **characterised in that** the lever arm (11a) is shaped such that it can be actuated with a thumb or finger.

12. Cutting device according to any of the preceding claims, **characterised in that** a ring (32) is formed on the lever arm (11a) to enable a finger to be used.

13. Cutting device according to any of the preceding claims, **characterised in that** a spring (33) is provided between the lever arm (11a) and the clamping attachment (9) to restore the actuation lever (11) after actuation.

14. Cutting device according to any of the preceding claims, **characterised in that** the clamping attachment (9) has a slot (39) extending radially outwards from the bore (21), and the two areas on either side of the slot of the clamping attachment (9) can be clamped against one another by means of a tightening screw (37).

15. Cutting device according to any of the preceding claims, **characterised in that** the clamping attachment (9) is provided with a recess (41) into which the cutting blade (35) can be inserted.

16. Cutting device according to any of the preceding claims, **characterised in that** the clamping attachment (9) is formed integrally with the shaft or handle.

## Revendications

1. Dispositif de coupe pour un outil, en particulier pour un tournevis (1), avec un support de pièce de blocage (9) qui peut être enfilé et immobilisé sur une tige (5), en particulier du tournevis (1), un levier d'actionnement (11) étant monté pivotant sur le support de pièce de blocage (9) et le levier d'actionnement (11) et/ou le support de pièce de blocage (9) présentant un tranchant (17, 31, 35) pour couper des câbles ou conduites électriques.

2. Dispositif de coupe selon la revendication 1, **caractérisé en ce que** le support de pièce de blocage (9) peut être fixé sur la tige (5) du tournevis (1) au moyen d'une vis de blocage ou de serrage (37).

3. Dispositif de coupe selon l'une des revendications précédentes, **caractérisé en ce que** le levier d'actionnement (11) est monté pivotant sur le support de pièce de blocage (9) et présente un premier bras de levier (11a) pour actionner et un deuxième bras de levier (11b) pour trancher le conducteur ou câble entre le support de pièce de blocage (9) et le levier d'actionnement (11).

4. Dispositif de coupe selon l'une des revendications précédentes, **caractérisé en ce que** le bras de levier (11b) présente une forme courbe.

5. Dispositif de coupe selon l'une des revendications précédentes, **caractérisé en ce qu'**un bouton d'actionnement (15) peut être placé sur le bras de levier (1 1 a).

6. Dispositif de coupe selon l'une des revendications précédentes, **caractérisé en ce que** le support de pièce de blocage (9) est traversé par une perçage central (21) pour enfiler le support de pièce de blocage (9) sur la tige (5) du tournevis.

7. Dispositif de coupe selon l'une des revendications précédentes, **caractérisé en ce qu'**une encoche (29) destinée à guider le câble et/ou conducteur est formée sur le support de pièce de blocage (9).

8. Dispositif de coupe selon l'une des revendications précédentes, **caractérisé en ce que** l'encoche (29) est réalisée à la manière d'une lame/d'un tranchant au niveau de son bord.

9. Dispositif de coupe selon l'une des revendications 1 à 8, **caractérisé en ce que** le tranchant est réalisé d'un seul tenant avec le support de pièce de blocage (9) ou le levier d'actionnement (11).

10. Dispositif de coupe selon l'une des revendications 1 à 8, **caractérisé en ce que** le tranchant est réalisé sous la forme d'une lame (35) pouvant être rapportée sur le support de pièce de blocage (9) ou sur le levier d'actionnement (11).

11. Dispositif de coupe selon l'une des revendications précédentes, **caractérisé en ce que** le bras de levier (11a) est conformé pour un actionnement avec le pouce ou le doigt.

12. Dispositif de coupe selon l'une des revendications précédentes, **caractérisé en ce qu'**une bague (32) est formée sur le bras de levier (11a) pour placer un doigt.

13. Dispositif de coupe selon l'une des revendications précédentes, **caractérisé en ce qu'**entre le bras de levier (11a) et le support de pièce de blocage (9) est prévu un ressort (33) pour ramener en arrière le levier d'actionnement (11) après son actionnement.

14. Dispositif de coupe selon l'une des revendications précédentes, **caractérisé en ce que** le support de pièce de blocage (9) présente une rainure (39) qui s'étend radialement vers l'extérieur depuis le perçage (21) et **en ce que** les deux parties du support de pièce de blocage (9) de chaque côté de la rainure peuvent être serrées l'une vers l'autre au moyen d'une vis de serrage (37).

15. Dispositif de coupe selon l'une des revendications précédentes, **caractérisé en ce que** le support de pièce de serrage (9) est muni d'un évidement (41) dans lequel la lame (35) peut être insérée.

16. Dispositif de coupe selon l'une des revendications précédentes, **caractérisé en ce que** le support de pièce de blocage (9) est réalisé d'un seul tenant avec la tige ou le manche.
